# EUROPÄISCHE PATENTSCHRIFT

(11) **EP 1 092 786 B1**
(45) Veröffentlichungstag und Bekanntmachung des Hinweises auf die Patenterteilung: **01.09.2004**
(21) Anmeldenummer: 00203424.7
(22) Anmeldetag: 03.10.2000
(51) Int. Cl.: C22C 29/08, B23H 9/00, B23H 9/08

(54) **Hartmetall-Legierung zur Formgebung mittels funkenerosiver Bearbeitungs-verfahren**
Hard metal alloy for shaping by electrical discharge machining
Alliage métallique dur pour usinage par décharge électrique

(30) Priorität: 12.10.1999 AT 69999 U
(43) Veröffentlichungstag der Anmeldung: 18.04.2001
(73) Patentinhaber: CERATIZIT Austria Gesellschaft m.b.H., 6600 Reutte /Tirol (AT)
(72) Erfinder: Lackner, Andreas, Dr., 6600 Reutte (AT); Ferstl, Werner, 6600 Reutte (AT); Knünz, Gerhard, 6600 Lechaschau (AT); Martinz, Hans-Peter, Dr., 6600 Höfen (AT); Prandini, Klaus, 6600 Reutte (AT)
(74) Vertreter: Lohnert, Wolfgang, Dr.

(56) Entgegenhaltungen:
- CH-A- 647 812
- US-A- 3 746 456
- HULYAL R ET AL: "SINTERING OF WC-10 CO HARD METALS CONTAINING VANADIUM CARBONITRIDE AND RHENIUM-PART II: RHENIUM ADDITION" INTERNATIONAL JOURNAL OF REFRACTORY AND HARD METALS, MPR PUBLISHING SERVICES LTD., SHREWBURY, GB, Bd. 1, Nr. 10, 1991, Seiten 9-13, XP001079033 ISSN: 0263-4368

## Beschreibung

Die Erfindung betrifft die Verwendung einer Wolframkarbid-Kobalt-Hartmetall-Legierung für Bauteile, die aus entsprechenden Hartmetall-Rohlingen mittels funkenerosiver Bearbeitungsverfahren geformt werden.
Ein Schwerpunkt liegt bei der Verwendung der Legierung für Schnitt- und Stanzwerkzeuge komplexer Geometrie, welche mittels des Draht- oder Senk-Erodierverfahrens geformt werden.

Eine Vielzahl verschiedener Hartmetallsorten, lange Zeit vor allem als Schneidplatten in Zerspanungswerkzeugen verwendet, dienen in zunehmendem Umfang als Werkstoff für verschleißfeste Bau- oder Konstruktionsteile, z.B. im Werkzeugbau.

Das Schneiden bzw. die Formgebung von Werkstücken mittels Funkenerosion wurde in den 50er Jahren zur Bearbeitung von Stahlwerkstoffen entwickelt und wird heute vermehrt für die formgebende Bearbeitung von Werkstücken aus Hartmetall angewendet. Die Herstellung geometrisch komplexer Formkörper mittels Erosionsverfahren ist bei vergleichbarer Qualität deutlich kostengünstiger als nach üblichem Formpressen und nachfolgender spanender Bearbeitung.

Unter funkenerosiver Bearbeitung eines Werkstückes versteht man dessen Formgebung unter explosionsartigen Verdampfens von Materialteilchen von der Werkstückoberfläche, verursacht durch lokale Aufheizung infolge elektrischer Stromimpulse mit Plasmabildung zwischen Werkstück und Erodierwerkzeug in einem flüssigen Dielektrikum - üblicherweise Wasser oder organische Stoffe, wie Petroleum oder Kerosin.
Dazu wird ein Elektrokondensator aufgeladen und entlädt sich beim Erreichen der Durchschlagsspannung zwischen Werkstück und Werkzeug als kurzzeitiger, hoher Stromimpuls unter Bildung eines Plasmas (T > 10.000°K) im Dielektrikum.
In der Praxis haben sich besonders das Senkerodieren und das Draht- bzw. Schneiderodieren bewährt. Beim Senkerodieren weist das Werkzeug bzw. die Erodierelektrode, die Negativform der Werkstückgeometrie auf. Die Elektrode wird entsprechend dem Schneidfortgang auf das Werkstück abgesenkt.
Beim Drahterodieren wird eine Drahtelektrode von üblicherweise 0,05 mm bis 0,3 mm Durchmesser auf einer dem Werkstückprofil entsprechenden Bahn am Werkstück vorbeigeführt.

Während nach dem Prozess des Senkerodierens beim Schruppen Abtragsleistungen zwischen 20 mm³/min und 50 mm³/min und beim Schlichten bis 1 mm³/min üblich sind, lassen sich beim Drahterodieren Schruppleistungen von 200 mm³/min bis 500 mm³/min und beim Schlichten von etwa 10 mm³/min erreichen.
Die Oberflächenrauhigkeit Rₐ liegt beim Schlichten mittels Senkerodieren bei einem Wert von ca. 1,4 µm, beim Drahterodieren günstigstenfalls bei ca. 0,2 µm. Damit bedürfen erodierte Werkstückflächen in der Regel keiner mechanischen Oberflächennachbearbeitung.

Hartmetall besteht definitionsgemäss aus Teilchen einer Hartstoffphase, die in eine metallische Binderphase eingelagert ist.
Die Vielzahl bekannter, unterschiedlicher Hartmetall-Legierungen weisen stark unterschiedliche, sich vielfach gegenseitig ausschließende Eigenschaften auf.
Hartmetallsorten mit Nickelbinder, ggf. mit Chromzusatz, sind korrosionsbeständiger als solche mit Kobaltbinder. Erstere besitzen aber in der Regel geringere Härte, und daraus folgend geringere Abrasivverschleiß- und Zähigkeits-Eigenschaften. Die tatsächlich gegebenen Eigenschaftswerte variieren wiederum mit der Teilchen- bzw. Korngröße im Hartmetall, welche ihrerseits wiederum vom Kornwachstum während des Hartmetall-Sintervorganges und damit von den Sinterbedingungen geprägt sind. Zur Beeinflussung bzw. Steuerung dieser Eigenschaften sind unterschiedlich zusammengesetzte Hartstoffe auf Karbid-, und/oder Karbonitridbasis in Verbindung mit einer Vielzahl von Zusätzen zu den Bindephasen auf Kobalt- und/oder Nickelbasis bekannt.

Von den vorbeschriebenen Hartmetallsorten auf WC-Co-Basis bzw. mit überwiegend Co-Binder seien unter Berücksichtigung vorliegender Erfindung die nachfolgenden genannt.

In der DE AS 27 19 532 wird eine WC-Co-Hartmetallsorte mit 20 bis 95 Gew.% Wolframkarbid sowie den Zusatzkarbiden TiC, TaC, NbC, HfC, VC und/oder Mo₂C und 2 bis 30 Gew.% einer Kobalt-Rhenium-Binderlegierung mit 5 bis 80 Gew.% Rheniumanteil genannt. Das Kobalt ist teilweise durch Eisen oder Nickel ersetzbar. Während bis dahin bekannte Zusätze zum Kobaltbinder unter Bildung spröder, komplexer Karbide mit der Karbidphase reagierten und damit eventuelle Qualitätsverbesserung der Binderphase negativ kompensierten, gilt diese Einschränkung für Kobalt-Rheniumbinder nicht. Der Binder hat gegenüber reinem Kobaltbinder eine höhere Warmfestigkeit, was z.B. einem Schneideinsatz bei der Metallzerspanung mit bis zu 800° hohen Arbeitstemperaturen an der Schneidspitze zugute kommt.

Im Fachaufsatz "Sintering of WC-10Co Hard Metals containing Vanadium, Carbonitride and Rhenium", Autor: Hulyal R. et al, erschienen in "Int. J. Refr. Metals & Hard Materials", (1991), Vol. 10(1), Seite 9 bis 13, ist der Zusatz von 0,2 Gew% Rhenium in WC-10Co und WC / V(C,N)-10Co genannt und der "Re-Effekt" wird mit der Erreichung höherer Härtewerte in WC-reichem Hartmetall beschrieben.

In der SU Patentschrift, Anmeldenummer 91/4952086, ist eine WC-Co-Hartmetall-Legierung für die vorteilhafte Nutzung als Elektrode in Ultraschall-Mikroschweißwerkzeugen wegen des Vorteils einer großen Arbeitsstabilität beschrieben. Die Legierung besteht aus 0,1 bis 3 Gew.% Rhenium, 0,15 bis 3,85 Gew% Kobalt, 0,05 bis 2 Gew.% Chromkarbid, Rest Wolframkarbid.

Soweit bisher Hartmetall-Bauteile oder Werkzeugeinsätze mittels funkenerosiver Bearbeitungsverfahren für Anwendungsfälle gefertigt wurden, bei denen es vor allem auf hohe Schlagzähigkeit und Festigkeit gegen abrasiven Verschleiß ankommt, z.B. bei Werkzeugeinsätzen für Schnitt- und Stanzwerkzeuge, wurden üblicherweise

Wolframkarbid-Kobalt-Hartmetallsorten, wie die ISO-Sorten K30 und K40 mit Standardkomgrößen von 1 - 2 µm verwendet.
Die Sorte K40 enthält in der Karbidphase neben WC zusätzlich < 1 Gew.% TiC + Ta(Nb)C und 12 Gew.% Kobalt als Bindephase, jeweils bezogen auf den Gesamtwerkstoff.
Fallweise wurden Hartmetallsorten mit Ni-Anteilen im Kobalt-Binder, aber z.B. auch Submikron-Hartmetallsorten vorgenannter Zusammensetzung verwendet.

Alle bisher für die Formgebung mittels funkenerosive Bearbeitung eingesetzten Hartmetallsorten auf WC-Co-Basis zeigen als schwerwiegenden Nachteil eine in der Fachwelt vielfach mit "Lochfraß" bezeichnete Erscheinung, d.h. an mittels Erodieren gefertigten Bauteilen zeigen sich mit etwa 1 bis 5% Wahrscheinlichkeit in statistisch unregelmäßigen Einzelfällen Löcher von bis zu 20 µm Tiefe in der Werkstückobefläche. Grund hierfür ist das Auslösen von Binderwerkstoff (Kobalt) aus der Werkstückoberfläche während des Erodierprozesses im Bereich dieser Löcher. Die Ursache ist vermutlich ein elektrochemischer Korrosionsprozess zwischen den einzelnen Phasenbestandteilen einer Hartmetall-Legierung unter Einschluß des Dielektrikums der Erodieranlage.
Dieser korrosive Lösungsprozess ist zumindest auch die unmittelbare Folge einer nicht ausreichenden Spülung des Schnittspalts zwischen Werkstück und Erodierelektrode mit dem flüssigen Dielektrikum, die dort einen elektrischen Leitwertanstieg, bzw. einen zu hohen Leitwert des Dielektrikums nach sich zieht.
Häufig sind die Kobalt-Auslösungen nicht ohne Mikroskop erkennbar, da die Oberfläche mangels Entfernung der Karbidphase in einem optisch einwandfreien

Zustand zu sein scheint. Bemerkenswerterweise tritt der Lochfraß zuweilen auch an einer nicht unmittelbar erodierten Werkstück-Teilfläche auf, wahrscheinlich infolge Zunahme des Leitwertes im gesamten Dielektrikum.
Einer lokalen Erhöhung des Leitwertes im Schnittpunkt wird in der Praxis durch kontinuierlichen, lokalen Austausch von Dielektrikum mittels aktiver Spülung des Schnittspaltes entgegengewirkt. Bei komplex dimensionierten Schnittprofilen und bei anspruchsvollen Fertigungsparametem kann jedoch bis heute eine ausreichende Spülung des Schnittspaltes nicht sichergestellt und der "Lochfraß" daher nicht ausgeschlossen werden.
Die bekannten Gegenmaßnahmen beschränken sich vielmehr bis heute auf die Bekanntgabe von "Ansatzpunkten zur Problemlösung Lochfraß", wie: "Leitwert des Dielektrikums ständig beachten und kleiner 5 µm S/cm halten" oder "die Bearbeitung unterbrechen bzw. gar nicht erst starten, wenn der obengenannte Leitwert nur mit Mühe gehalten werden kann".
Das praktische Ergebnis ist eine unbefriedigend hohe Ausschussquote bei erodierten Hartmetall-Werkstücken.

Aufgabe vorliegender Erfindung ist es daher, eine Hartmetall-Legierung bereitzustellen, die wegen der unverzichtbar hohen Anforderungen an die Kombination von
Abrasiv-Verschleißfestigkeit, Zähigkeit und Härte wie bisher weiterhin auf WC-Co-Basis aufgebaut ist und die für eine funkenerosive Bearbeitung besser geeignet ist als die bisher für derartige Zwecke verwendeten WC-Co-Hartmetallsorten.

Die Hartmetallsorte soll insbesondere weniger anfällig gegen "Lochfraß" sein und soll doch den bisher verwendeten Sorten hinsichtlich Zähigkeit und abrasivem Verschleiß nicht, oder nicht wesentlich nachstehen.
Diese Aufgabe wird erfindungsgemäß durch die Verwendung einer WC-Co-Hartmetall-Legierung für Bauteile oder Werkzeugeinsätze gelöst, welche mittels funkenerosiver Bearbeitungsverfahren geformt werden, wobei die Legierung besteht aus einer Karbidphase mit > 90 Gew.% WC-Anteil an der Karbidphase sowie, bezogen auf die Hartmetall-Legierung, aus 8 bis 15 Gew.% Binderphase, in der ein Metall-Zusatz vollständig gelöst ist, wobei dieser Zusatz in einem Anteil von 0,1 bis 3 Gew.%, bezogen auf die Binderphase vorliegt und mindestens ein Metall aus der Gruppe Re, Ge, Ga, Ir, Os, Pd, Ag, Au, Pt, Te, Sb, Rh und Ru umfasst.

Bevorzugte Ausführungen der Erfindung sind in den Patentunteransprüchen beschrieben.

Die erfindungsgemäß verwendete WC-Co-Hartmetall-Legierung enthält in der Hartstoff- bzw. Karbidphase neben > 90 Gew.% WC-Anteil ggf. TaC, TiC, NbC, HfC, VC und/oder Mo₂C, aber auch Mischkarbide, insbesondere (TaNb)C.
Karbonitride oder reine Nitride, wie sie in Cermets eingesetzt sind, scheiden als Hartstoff aus.

In der erfindungsgemäß verwendete Hartmetall-Legierung wird bevorzugt reines Kobalt plus Zusatzmetall als Binderphase verwendet, alternativ und eher in Sonderfällen wird stets den größten Gewichtsanteil im Binder aufweisende Kobalt durch bis zu < 50 Gew% Nickel bezogen auf den Binder ersetzt. Wie eingangs erwähnt, verbessern Ni-Anteile zwar die Korrosionseigenschaften des Hartmetalls, reduzieren zugleich aber die Abrasiv-, Verschleiß- und Zähigkeitseigenschaften.
Größere Anteile an Ni in der Kobalt-Binderphase sind somit nur bei Bauteilen gemäß Erfindung tolerierbar, bei denen vergleichsweise geringere mechanische Eigenschaftsanforderungen vorliegen.

Die Zusätze zur Kobalt-Binderphase gemäß erfindungsgemäß verwendetem Hartmetall sind im Binder vollständig und homogen gelöst. Es ist zu vermeiden, dass die Zusätze auch nur anteilsweise als eigene Phase, z.B. als kleine Phasenbereiche an den Korngrenzen zwischen Karbid- und Binderphasen ausgeschieden werden.
Die mengenmäßige Obergrenze der Binderzusätze ist dementsprechend an die jeweilige Legierungszusammensetzung anzupassen und ggf. an einem Fertigungsmuster mittels Mikrosondenanalysen oder Transmissionselektronen-Mikroskopie zu überprüfen.
Die genannten Metallzusätze zum Binder werden vorteilhafterweise im Hartmetall-Pulveransatz vor dem Verpressen und Sintern in Pulverform beigegeben, entweder als metallische Komponente oder, den Chromzusatz betreffend, auch in Form eines Chromkarbides, das sich während des Hartmetall-Sinterns unter vollständiger Lösung des Metalls in der Kobalt-Binderphase zersetzt.
Der Einfluss der Metallzusätze, sowie von Nickel, Chrom und Kupfer zum Binder auf die mechanische und physikalische Hartmetalleigenschaften ist bekannt und wurde teilweise zum Stand der Technik kurz erörtert. Der Einfluss der Metallzusätze ist aufgrund der geringen, nach dieser Erfindung tatsächlich zugegebenen Mengen indes nicht bedeutsam. Somit ist für die in der erfindungsgemäß verwendeten Hartmetall-Legierungen angeführten Metallzusätze zum Binder, aber sichergestellt, dass sich die Zähigkeits- und Verschleissfestigkeitseigenschaften gegenüber denen des reinen WC-Co-Hartmetalls nicht nachteilig verändern - eine laut Aufgabenstellung für vorliegende Erfindung unverzichtbare Forderung.
Entscheidend für die Auswahl der Binderzusätze nach Art und Menge ist einerseits deren vollständige Löslichkeit im Kobaltbinder, vor allem aber eine sich dadurch ergebende vorteilhafte Verschiebung des elektrochemischen Korrosionspotentials von Binder und Karbidphase gegeneinander - siehe dazu weiter unten. Die Binderphasen ergeben eine Annäherung ihrer - messtechnisch ermittelten -elektrochemischen Potentiale an das der WC-Karbidphase. Die Potentialannäherung hat zur Folge, dass in Praxistests auch unter schwierigsten Verfahrensbedingungen kein "Lochfraß" mehr bei der Formgebung des Rohhartmetalls durch funkenerosive Verfahren festgestellt wurde und der "Lochfraß" demnach in praktischen Anwendungsfällen als überwunden angesehen werden kann.

Bisher wurde den elektrochemischen Potentialen von Karbid und Binderphase im Hartmetall keine Bedeutung beigemessen und sie wurden bei der Hartmetall-Sortenentwicklung auch nicht besonders beachtet bzw. ermittelt.
Es gab bisher auch keine Hinweise darauf, dass sich durch Adaptierung der elektrochemischen Potentiale von Karbid- und Binderphase das Auftreten des Lochfraßes beim Formen von Hartmetall mittels funkenerosiver Bearbeitung wirksam vermeiden lässt.

Somit bestand für den Hartmetall-Fachmann bisher keine Veranlassung, die erfindungsgemäß verwendeten benannten Hartmetall-Legierungen für die Bearbeitung durch Draht- oder Senkerodieren als besonders geeignet zu empfehlen.

Es war für den Fachmann vielmehr völlig überraschend, dass sich der als korrosionsanfällig bekannte Kobaltbinder durch vergleichsweise geringe Zusätze an den genannten, in Lösung befindlichen Metallen bezüglich des "Lochfraß"-Anfälligkeit beim Erodierprozess in dem tatsächlich erreichten Ausmaß verbessern lässt, ohne erkennbare Nachteile hinsichtlich der mechanischen Eigenschaften und damit vor allem hinsichtlich der Standzeiten von entsprechenden Werkzeugeinsätzen, zu bringen.

Mittels solcher, dem Elektrochemiker vertrauten Verfahren und Einrichtungen sowie danach gewonnener Messergebnisse, lässt sich eine betragsmäßige Annäherung der Potentiale von Karbid- und Binderphase bei Zugabe der Zusätze zum Binder ausmachen und als Messgröße für das Ausbleiben des gefürchteten Lochfraßes mit großer Sicherheit feststellen.

Der Zusatz von Kupfer zum Binder erfolgt vornehmlich wegen dessen Korrosionsbeständigkeit gegenüber Cl-Ionen, welche manchmal im Dielektrikum enthalten sein können.

Die erfindungsgemäß verwendete Legierung unterscheidet sich in ihrem Aufbau und in der Herstellung im Grundsatz nicht von bekannten Legierungen. Es bedarf für den Fachmann daher auch keiner weiteren Anleitungen zu ihrer Herstellung. Der Hinweis wird jedoch wiederholt, dass bei der Herstellung sorgfältig darauf zu achten ist, dass die Binderzusätze in solchen maximalen Mengen zugegeben werden, dass es zur vollständigen Lösung der Zusätze im Kobaltbinder kommt, ohne Ausscheidung bzw. Bildung von Bereichen reiner Zusatzmetallphasen.

Die funkenerosive Herstellung der geometrischen Konturen von Hartmetallbauteilen ist nicht auf einzelne Ausführungs- oder Anwendungsbeispiele beschränkt. Ein Schwerpunkt der Anwendung liegt bei der funkenerosiven Bearbeitung von Hartmetall-Rohteilen für den weiten Anwendungsbereich Schnitt- und Stanzwerkzeuge zur Herstellung von metallischen oder nichtmetallischen, überwiegend folienartigen Massenteilen mit häufig komplexer und filigraner geometrischer Form.

Die Erfindung wird an Hand der nachfolgenden Beispiele näher beschrieben, in denen Hartmetall-Proben unterschiedlicher chemischer Zusammensetzung mit solchen nach dem Stand der Technik verglichen werden.

Die Herstellung aller in nachfolgenden Beispielen genannten Hartmetalllegierungen erfolgt nach bekannten Verfahren mit folgenden wesentlichen Verfahrensschritten: Die einzelnen Pulvermaterialien der Korngrößen zwischen 1 und < 4 µm werden im Attritor vermahlen und gemischt. Die Pulvermischung wird anschließend nach üblichem Verfahren granuliert und zu Proben bzw. Formteilen verpresst. Die Proben werden standardmäßig entwachst und bei einer Temperatur zwischen 1380 und 1420° C gesintert.

Die physikalischen und mechanischen Eigenschaften der Hartmetalllegierungen liegen nahe beieinander, insbesondere auch hinsichtlich Härte (HV30), Restporosität und mittlerer WC-Korngröße von 1,5 µm.

Ein Schlüssel zu vorliegender Erfindung und deren Glaubhaftmachung liegt nun darin, an Hartmetallproben unterschiedlichen chemischen und metallurgischen Aufbaus die elektrochemischen Potentiale - jeweils gegenüber einer Standard-Elektrode
(Ag/AgCl-Elektrode) - zu ermitteln und daraus Rückschlüsse für die Korrosionsfestigkeit der jeweiligen Hartmetalllegierung zu ziehen.

Die Potential-Messungen sämtlicher Beispiele wurden in einer Standard 3-Elektrodenzelle durchgeführt.
Details zum elektrochemischen Untersuchungsverfahren, insbesondere in Anwendung bei Hartmetall, finden sich in den beiden Fachaufsätzen:
*"The Relationship between Electrochemical Behaviour and Inservice Corrosion of WC-Based Cemented Carbides" von A. M. Human und H. Exner, veröffentlicht im "International Journal of Refractory Metals & Hard materials" Vol. 15 (1997) S. 65-71 oder*
*"Anodic Polarization and Corrosion of WC-Co Hardmetals" von W. J. Tomlinson und N. Y. Ayerst, veröffentlicht im "Journal of Material Science", Vol. 24 (1989), S. 2348-2352. "*

Die wesentlichen Messwerte aus diesen Untersuchungen sind
- das Korrosionspotential E_{corr} für die Hartmetalllegierung, sowie
- die kritische, bzw. die Passivierungsstromdichte i_{crit} bzw. i_{pass,}
wobei E_{corr} ein Maß für die Korrosionswahrscheinlichkeit des Hartmetalls im Dielektrikum der Erodieranlage ist und wobei Unterschiede des Potentialwertes für unterschiedliche Hartmetall-Zusammensetzungen einer Aussage über bessere oder schlechtere Korrosionsbeständigkeit während des Erodierprozesses zulassen. Je positiver der Wert des Korrosionspotentials E_{corr} ist,
desto geringer ist die Anfälligkeit der Hartmetall-Sorte gegen Korrosion.

Bei Potentialen positiver als E_{corr} tritt Korrosion in der Hartmetalllegierung auf, und zwar im Bereich der Binderphase, weil diese grundsätzlich elektrochemisch unedler als die Hartstoffphase (WC) ist.
Die Stromdichten i_{crit}, bzw. iₚₐₛₛ stellen eine Art Grenzwertstromdichte zwischen der Hartmetallprobe und einer Platingegenelektrode bei hohen Potentialen dar und sind ein Maß für die Metallauflösungsrate (sprich Korrosion) in der Binderphase.

Für diese sogenannten potentiodynamischen Stromdichte-Potential-Messungen aller in den nachfolgenden Beispielen verwendeten Hartmetallsorten wurden Hartmetallproben einer Größe von ca. 0,5 x 0,5 x 1 cm geschliffen und poliert. Die Versuche erfolgten in einer Essigsäurelösung (12 g/l) / Modelllösung als Dielektrikum. Die Versuchstemperatur lag bei 30 +/- 1° C. Die Proben wurden bei - 800 mV 10 Minuten lang polarisiert, anschließend 30 Minuten lang stabilisiert und schließlich mit einer positiven Scanrate von 0,3 mV/s zwischen den Eckwerten -500 und +1000 mV Polarisationsspannung gegen eine Platinelektrode geschaltet.

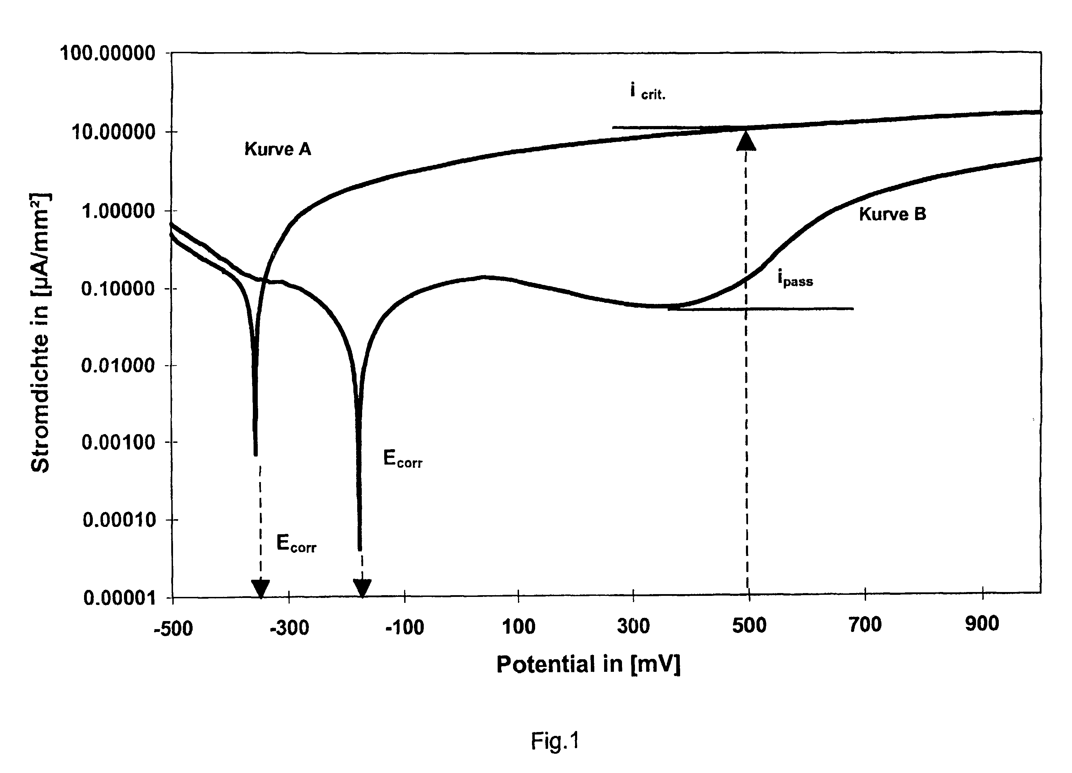

Die aus potentiodynamischen Stromdichte-Potential-Messungen (Stromhöhe bezogen auf Probenoberfläche) in Abhängigkeit vom jeweils an der Hartmetallprobe anliegenden Potential ergeben Beziehungen, wie sie in nachfolgender Figur 1 dargestellt ist.
Für Hartmetalllegierungen sind 2 unterschiedliche Potential/Stromdichte-Verläufe gemäß Fig. 1 charakteristisch (Typ A oder Typ B - Kurve). In der charakteristischen Typ A-Kurve zeigt die Hartmetallprobe einen steilen Stromdichteabfall bei einem charakterischen Potential E_{corr}, um sich bei hohen Potentialwerten einer maximalen Grenzstromdichte anzunähern. Definitionsgemäß wird bei einem Potential von 500 mV die sich dort ergebende Stromdichte mit i_{crit} bezeichnet.
Alternativ zu Kurve A ist für eine Vielzahl von Hartmetallsorten der Kurvenverlauf von Kurve B für die Potential-Stromdichte-Beziehung charakteristisch. Wiederum tritt ein charakteristisches Potential E_{corr} auf und weiters erscheint bei höheren Potentialen ein typisches Stromdichteminimum, das mit iₚₐₛₛ bezeichnet wird und sich als eine Folge typischer Passivierungsreaktionen einzelner Komponenten der Hartmetalllegierung erklären lässt.

### Beispiel 1

Zusammensetzung des Pulveransatzes für die Herstellung der erfindungsgemäß verwendete Hartmetalllegierung:
12 Gew% Co; 0,1 Gew% Pd; 0,2 Gew% TiC; 0,4 Gew% Ta/NbC; Rest WC; (Gew% jeweils bezogen auf die Komponenteneinwaage).

Eine Untersuchung obiger gesinterter Hartmetallproben mittels Elektronenstrahl-Mikrosonde zeigte, dass das der Pulvermischung zugegebene Palladium vollständig im Co-Binder gelöst ist.

Die elektrochemische Stromdichte Potentialmessung ergab:
Kurventyp: "A"
E_{corr} (mV) = -300
i_{crit} (µm/mm²) = 7,078

Zum Vergleich mit der erfindungsgemäßen Hartmetalllegierung wurde eine standardisierte Sorte K40 herangezogen, die bisher üblicherweise für durch Funkenerodieren geformte Bauteile, bzw. Werkzeugseinsätze in Verwendung stand. Chemische Zusammensetzung der K40 Sorte; 12 Gew% Co; 0,2% Gew% TiC;
0,4 Gew% Ta/NbC, Rest WC;
Die elektrochemische Stromdichtepotentialmessung ergab:
Kurventyp A
E_{corr}(mV) = -360
i_{crit} (µA/mm²) = 8,08

Entsprechend der vorausgegangenen Erläuterungen erlaubt ein Vergleich der Messwerte die Aussage, dass die Probe in der Zusammensetzung gemäß Erfindung deutlich weniger korrosionsanfällig ist als die Vergleichsprobe.

Die in ihren mechanischen Eigenschaften vergleichbaren Hartmetallsorten K40 und Legierung gemäß Beispiel 1 ließen sich mittels funkenerosiver Verfahren zu Einsätzen für Stanzwerkzeuge in vergleichbar guter Qualität verarbeiten.
Ein nachfolgender Vergleichstest beider Hartmetallsorten in einer typischen Fertigung zur Herstellung gestanzter plattenförmiger Profilteile aus Elektroblech ergab für beide Sorten vergleichbar gute Schnittqualität und vergleichbar gute Werkzeugstandzeiten.

Während indes bei der serienmäßigen Fertigung von Stanzwerkzeugen aus der Hartmetallsorte K40 mittels funkenerosiver Verfahren, wie eingangs geschildert, etwa 5 % der so gefertigten Werkzeuge wegen nicht tolerierbarer Korrosion ausfallen, waren bei der Herstellung einer Kleinserie von Stanzwerkzeugen in Anwendung der Hartmetallsorte von Beispiel 1 keinerlei Korrosionserscheinungen und kein korrosionsbedingter Ausschuss feststellbar.

### Beispiel 2

Der Pulveransatz wies folgende Zusammensetzung auf:
12 Gew% Co; 0,1 Gew% Ge; 0,2 Gew% TiC, 0,4 Ta/NbC, Rest WC.

Der Herstellungsgang für die Fertigung der Hartmetallprobe und die an der Probe ermittelten physikalisch mechanischen Eigenschaften entsprachen denen von Beispiel 1 und gleichzeitig denen der ISO-Sorte K40.
Die elektrochemischen Korrosionsuntersuchungen wurden durchgeführt, wie vor Beispiel 1 beschrieben.

Dabei ergaben sich folgende Werte:
Kuventyp: "A"
E_{corr}(mV) = -288
i_{crit} (µA/mm²) = 8,021

Ein Vergleich mit der Standard-Sorte K40 zeigte, dass auch die Hartmetalllegierung nach diesem Beispiel deutlich günstigere Korrosionswerte aufwies und dessen ungeachtet vergleichbar gute Schneid-Ergebnisse und Standzeiten für mittels funktenerosiver Verfahren gefertigter Stanzwerkzeuge ergab.

### Beispiel 3

Beispiel 3 diente der Ermittlung von E_{corr}, Iₚₐₛₛ Kemgrößen für eine insofern vom Standard K40 abweichenden Hartmetallsorte, als dieser Chrom zugegeben wurde, was diese Hartmetall-Legierung gegenüber einer reinen K40 Sorte sprunghaft korrosionsfester macht.

Die verwendete Pulverzusammensetzung betrug demnach:
12 Gew% Co, 0.8 Gew% Cr₃C₂, Rest WC.

Die so gewonnenen Kenngrößen dienten als Referenz für nachfolgende erfindungsgemäße Beispiele 4-7, in denen einem Pulveransatz analog vorliegendem Beispiel 3 zusätzlich erfindungswesentliche Komponenten zugegeben wurden.

Mittels Mikrosondenmessung wurde ermittelt, dass sich das dem Pulveransatz beigefügte Cr₃C₂ während der Sinterung zersetzt hatte und dass die Cr-Anteile vollständig in der Co-Bindephase gelöst waren.

Die elektrochemischen Untersuchungen entsprachen der weiter vom gegebenen Beschreibung und ergaben
Kurventyp: "B"
E_{corr} (mV) = -247
iₚₐₛₛ (µA/mm²) = 2,93

### Beispiel 4

Die Pulverauswahl und Hartmetallherstellung erfolgte wie vor Beispiel 1 beschrieben; die chemische Zusammensetzung des Pulveransatzes lautetet:
12 % Co; 0,8 % Cr₃C₂; 500 Gew.ppm Re; Rest WC.

Die physikalischen und mechanischen Eigenschaften stimmten weitgehend mit denen nach Beispiel 1 überein.

Bei der elektrochemischen Stromdichtepotentialmessung (durchgeführt wie vor Beispiel 1 beschrieben) ergab sich:
Kurventyp B
E_{corr} (mV) = -196,7
iₚₐₛₛ (µA/mm²) = 0,0461

Die Zugabe von Re zu einem ansonsten üblicherweise verwendeten Pulveransatz nach Beispiel 3 bewirkte eine sprunghafte Verbesserung der Kenngrößen E_{corr} und iₚₐₛₛ gegenüber den dort ermittelten Werten.

Aus zwei gesinterten Hartmetallblöcken (Maße: 150 x 80 x 45 mm) wurden 40 Stück Stanzstempel für ein Rotor-Statorwerkzeug ohne Anzeichen eines korrosiven Angriffs auf Fertigmaß hergestellt, und zwar unter vom Anlagenhersteller vorgegebenen Standardbedingungen auf einer
"AGIE Evolution" - Draht-schneidmaschine (Hersteller: Fa. AGIE, CH). Diese Stempel wurden in ein Stanzwerkzeug zur Herstellung von Motorenblechen (Blechqualität DIN M400- 50A, Streckgrenze ca. 320 N/mm², Zugfestigkeit ca. 460 N/mm², Bruchdehnung ca. 25%, chemische Zusammensetzung: C:0,07 Gew.%, Si<2,5%) eingebaut.
Auf einem Bruderer Stanzautomaten (Hersteller: Fa. Bruderer, CH), mit einer Presskraft von 100 Tonnen, wurden mit diesem Werkzeug bei Hubzahlen von ca. 400 Hüben pro Minute insgesamt 5,2 Mio Hübe ohne Nachschliff erreicht. Das Nachschärfen erfolgte wegen erhöhten Verschleißes an der Schneidkante, der sich in Form einer Gratbildung am Werkstück auswirkte.
Im Vergleich dazu wurden bei gleicher Stanzarbeit mit einem durch Funkenerosion geformten Werkzeug aus der bekannten Hartmetall-Sorte K 40 insgesamt 4,1 Mio Hübe, mittels der bekannten Vergleichssorte gemäß Beispiel 3 insgesamt 4,5 Mio Hübe ohne Nachschliff des Werkzeuges erreicht.

### Beispiel 5

Die Pulverauswahl und Hartmetallherstellung erfolgte wie vor Beispiel 1 dargestellt; die chemische Zusammensetzung des Pulveransatzes lautete:
12 % Co; 1,15 % Cr₃C₂; 500 ppm Re; Rest WC.

Die physikalischen und mechanischen Eigenschaften entsprachen in etwa denen von Beispiel 1 und 3.

Bei der elektrochemischen Stromdichtepotentialmessung (durchgeführt wie vor Beispiel 1 beschrieben) ergab sich:
Kurventyp: "B"
E_{corr} (mV) = - 118,3
iₚₐₛₛ (µA/mm²) = 0,0246

Der gegenüber Beispiel 4 größere Cr₃C₂-Anteil im Pulveransatz bewirkte die erwartete Binderveredelung, d. h. einen vergleichsweise positiveren Wert E_{corr} und eine kleinere Stromdichte iₚₐₛₛ.
Vorliegendes Beispiel belegt zugleich aber auch die Unverzichtbarkeit des Re-Zusatzes gemäß Erfindung zu den bisher verwendeten Standardlegierungen. Cr-Zugabe zur K40-Sorte allein stellt keine befriedigende Alternative zur erfindungsgemäßen Lösung dar.

### Beispiel 6

Herstellung und Pulverauswahl erfolgte wie vor Beispiel 1 bei nachfolgender chemischer Zusammensetzung des Pulveransatzes:
11,5 % Co; 0,8 % Cr₃C₂; 0,5 % Cu; 500 ppm Re, Rest WC.

Im Unterschied zu Beispiel 4 wies die Hartmetalllegierung einen im Binder vollständig gelösten Kupferanteil auf.

Die physikalischen und mechanischen Eigenschaften entsprachen in etwa deren von Beispiel 1, 3 und 4.

Bei der elektrochemischen Stromdichtepotentialmessung (durchgeführt wie vor Beispiel 1 beschrieben) ergab sich:
Kurventyp: "B"
E_{corr} (mV) = -178,1
iₚₐₛₛ (µA/mm²) = 0,05875

### Beispiel 7

Dieses erfinderische Beispiel unterscheidet sich von Beispiel 4 durch den teilweisen Ersatz von Co durch Ni im Binder, wobei Co und Ni lückenlos eine Legierung bilden. Hartmetallsorten mit Ni-Binder bzw. Ni-Zusatz im Co-Binder sind als korrosionsfester aber weniger verschleißfest bekannt.

Herstellung und Pulverauswahl erfolgte wie vor Beispiel 1 beschrieben. Die chemische Zusammensetzung des Pulveransatzes lautete:
7,6% Co; 4,4% Ni; 1,1% Cr₃C₂; 500 ppm Re; Rest WC.

Im Vergleich zu den weiter vom angeführten Beispielen wies diese Hartmetalllegierung,
- wie aus der Fachliteratur bekannt-, deutlich schlechtere mechanische Eigenschaften auf.

Bei der elektrochemischen Stromdichtepotentialmessung (durchgeführt wie in Beispiel 1 beschreiben) ergaben sich:
Kurventyp B
E_{corr}(mV) = -112,3
iₚₐₛₛ (µA/mm²) = 0,029

Die Korrosionsfestigkeit überstieg diejenige von reinen WC-Co-Sorten mit Re-Zusatz (Beispiel 4). Ein Wertevergleich zeigt jedoch, dass der entscheidende Beitrag zur Steigerung der Korrosionsfestigkeit gegenüber der vorbekannten WC-Co Sorten (Beispiel 3) auf den Re-Zusatz zurückzuführen ist.

Dies wird eindrucksvoll durch nachfolgenden Vergleich mit einer WC-Co/Ni-Legierung ohne Re-Zusatz demonstriert.

Die chemische Zusammensetzung des Pulveransatzes der Vergleichsprobe lautete:
7,6 % Co; 4,4 % Ni; 1,1 % Cr₃C₂; Rest WC.

Die physikalischen und mechanischen Eigenschaften entsprachen den der erfindungsgemäßen Probe nach diesem Beispiel.

Bei der elektrochemischen Stromdichtepotentialmessung (durchgeführt wie in Beispiel 1 beschrieben) ergab sich:
Kurventyp B
E_{corr} (mV) = -183,2
iₚₐₛₛ (µA/mm²) = 0,0483

## Patentansprüche

1. Verwendung einer WC-Co-Hartmetall-Legierung mit > 90 Gew.% WC-Anteil an der Karbidphase und mit 8 bis 15 Gew.%, bezogen auf die Hartmetall-Legierung, einer mehrheitlich aus Kobalt bestehenden Binderphase, in der ein Metall-Zusatz vollständig gelöst ist, wobei dieser Zusatz in einem Anteil von 0,1 bis 3 Gew.% , bezogen auf die Binderphase, vorliegt und mindestens ein Metall aus der Gruppe Re, Ge, Ga, Ir, Os, Pd, Ag, Au, Pt, Te, Sb, Rh und Ru umfasst, zur Herstellung von Bauteilen oder Werkszeugeinsätzen, zu deren Formgebung ein funkenerosives Bearbeitungsverfahren angewendet wird.

2. Verwendung einer Hartmetall-Legierung nach Anspruch 1, **dadurch gekennzeichnet, dass** der Werkzeugeinsatz ein Schnitt- und Stanzwerkzeug ist.

3. Verwendung einer Hartmetall-Legierung nach Anspruch 1 und 2, **dadurch gekennzeichnet, dass** diese in der Karbidphase neben WC weiterhin Karbide oder Mischkarbide der Metalle Ta, Nb, Ti, Hf, V und/oder Mo enthält.

4. Verwendung einer Hartmetall-Legierung nach Anspruch 1 bis 3, **dadurch gekennzeichnet, dass** die Binderphase < 30 Gew.% Ni enthält

5. Verwendung einer Hartmetall-Legierung nach Anspruch 1 und 4, **dadurch gekennzeichnet, dass** der Anteil der Binderphase an der Hartmetall-Legierung 9 bis 12 Gew.% beträgt.

6. Verwendung einer Hartmetall-Legierung nach Anspruch 1 bis 5, **dadurch gekennzeichnet, dass** der Metall-Zusatz 0,1 bis 0,5 Gew.% beträgt.

7. Verwendung einer Hartmetall-Legierung nach Anspruch 1 bis 6, **dadurch gekennzeichnet, dass** der Metall-Zusatz zum Binder Re, Ge und/oder Pd ist.

8. Verwendung einer Hartmentall-Legierung nach Anspruch 1 bis 7, **dadurch gekennzeichnet, dass** der Metallzusatz im Binder wahlweise zusätzlich aus Cr und/oder Cu besteht

9. Verwendung einer Hartmetall-Legierung nach Anspruch 8, **dadurch gekennzeichnet, dass** der Chrom-Zusatz als feinkörniges Cr₃C₂-Pulver in einem Anteil zwischen 0,1 Gew.% bezogen auf das Gewicht des Hartmetall-Pulveransatzes und der Löslichkeitsgrenze im Binder zum Pulveransatz zugegeben wird.

10. Verwendung einer Hartmetall-Legierung nach Anspruch 1-9, **dadurch gekennzeichnet, dass** der Kupfer-Zusatz mit einem Anteil von 4 Gew.% bis zu 10 Gew.%, bezogen auf die Binderphase, als feinkörniges Pulver zum Hartmetallansatz zugegeben wird.

11. Verwendung einer Hartmetall-Legierung nach Anspruch 1 bis 10, **dadurch gekennzeichnet, dass** die Formgebung mittels Funkenerosion durch Draht- oder Senkerodieren in flüssigem Dielektrikum erfolgt.

## Claims

1. Use of a WC/Co hard metal alloy with a > 90 wt.% WC content in the carbide phase and with 8 to 15 wt.%, relative to the hard metal alloy, of a binder phase consisting for the most part of cobalt, in which. binder phase a metal addition is completely dissolved, wherein this addition is present in a content of from 0.1 to 3 wt.%, relative to the binder phase, and comprises at least one metal from the group Re, Ge, Ga, Ir, Os, Pd, Ag, Au, Pt, Te, Sb, Rh and Ru, to produce components or tool inserts, for the shaping of which an electrical discharge machining method is used.

2. Use of a hard metal alloy according to claim 1, **characterised in that** the tool insert is a cutting and punching tool.

3. Use of a hard metal alloy according to claims 1 and 2, **characterised in that** said alloy further contains carbides or mixed carbides of the metals Ta, Nb, Ti, Hf, V and/or Mo in the carbide phase in addition to WC.

4. Use of a hard metal alloy according to claims 1 to 3, **characterised in that** the binder phase contains < 30 wt.% Ni.

5. Use of a hard metal alloy according to claims 1 and 4, **characterised in that** the content of the binder phase in the hard metal alloy amounts to 9 to 12 wt.%.

6. Use of a hard metal alloy according to claims 1 to 5, **characterised in that** the metal addition amounts to 0.1 to 0.5 wt.%.

7. Use of a hard metal alloy according to claims 1 to 6, **characterised in that** the metal addition to the binder is Re, Ge and/or Pd.

8. Use of a hard metal alloy according to claims 1 to 7, **characterised in that** the metal addition in the binder may additionally consist of Cr and/or Cu.

9. Use of a hard metal alloy according to claim 8, **characterised in that** the chromium addition is added to the powder batch as a fine-grained Cr₃C₂ powder in a proportion of between 0.1 wt.%, relative to the weight of the hard metal powder batch, and the solubility limit in the binder.

10. Use of a hard metal alloy according to claims 1-9, **characterised in that** the copper addition is added to the hard metal batch as fine-grained powder in a proportion of from 4 wt.% to 10 wt.%, relative to the binder phase.

11. Use of a hard metal alloy according to claims 1 to 10, **characterised in that** shaping by means of electrical discharge machining is carried out by wire or cavity sinking electrical discharge machining in a liquid dielectric.

## Revendications

1. Utilisation d'un mélangé de métaux durs WC-CO à teneur > 90% en poids de WC dans la phase de carbure et à teneur de 8 à 15% en poids, rapportée à l'alliage de métal dur, d'une phase de liant se composant en majorité de cobalt dans laquelle est totalement dissout un additif métallique, cet additif étant présent à une teneur de 0,1 à 3% en poids rapportée à la phase de liant et comprenant au moins un métal du groupe constitué par Re, Ge, Ga, Ir, Os, Pd, Ag, Au, Pt, Te, Sb, Rh et Ru, pour la fabrication de composants ou de plaquettes d'outil pour le façonnage desquels un procédé d'usinage par électroérosion est utilisé.

2. Utilisation d'un alliage de métal dur selon la revendication 1, **caractérisée en ce que** la plaquette d'outil est un outil de coupe ou de poinçonnage.

3. Utilisation d'un alliage de métal dur selon la revendication 1 ou 2 **caractérisée en ce que** cet alliage contient dans la phase de carbure, en plus du WC, des carbures ou des carbures mixtes des métaux Ta, Nb, Ti, Hf, V et/ou Mo.

4. Utilisation d'un alliage de métal dur selon l'une quelconque des revendications précédentes **caractérisée en ce que** la phase de: liant contient < 30% en poids de Ni.

5. Utilisation d'un alliage de métal dur selon l'une quelconque des revendications précédentes **caractérisée en ce que** la teneur de la phase de liant en alliage de métal dur est de 9 à 12% en poids.

6. Utilisation d'un alliage de métal dur selon l'une quelconque des revendications précédentes **caractérisée en ce que** la teneur en additif métallique est de 0,1 à 0,5% en poids.

7. Utilisation d'un alliage de métal dur selon l'une quelconque des revendications précédentes **caractérisée en ce que** l'additif métallique à la phase de liant est du Re, du Ge et/ou du Pd.

8. Utilisation d'un alliage de métal dur selon l'une quelconque des revendications précédentes **caractérisée en ce que** l'additif métallique contenu dans le liant se compose en outre facultativement de Cr et/ou de Cu.

9. Utilisation d'un alliage de métal dur selon la revendication 8, **caractérisée en ce que** l'additif de chrome est ajouté sous la forme d'une poudre de Cr₃-C₂ à grains fins à une teneur comprise entre 0,1%, rapportée au poids de la poudre d'additif de métaux durs, et la limite de solubilité dans le liant pour la poudre d'additif.

10. Utilisation d'un alliage de métal dur selon l'une quelconque des revendications précédentes **caractérisée en ce que** l'additif de cuivre est ajouté dans l'additif de métaux durs à une teneur de 4% en poids à 10% en poids rapportée à la phase de liant, sous la forme d'une poudre à grains fins.

11. Utilisation d'un alliage de métal dur selon l'une quelconque des revendications précédentes **caractérisée en ce que** le façonnage s'effectue par électroérosion, par étincelage par fil ou par étincelage par abaissement dans un diélectrique liquide.
